(19) **Europäisches Patentamt / European Patent Office / Office européen des brevets**

(11) **EP 2 739 004 B1**

(12) **EUROPEAN PATENT SPECIFICATION**

(45) Date of publication and mention
of the grant of the patent:
**14.09.2016 Bulletin 2016/37**

(51) Int Cl.:
*H04L 29/06* (2006.01)     *H04L 12/835* (2013.01)
*H04L 29/08* (2006.01)

(21) Application number: **13194424.1**

(22) Date of filing: **26.11.2013**

(54) **Apparatus and method for determining buffer size of network reception buffer, and network session system**

Vorrichtung und Verfahren zur Bestimmung der Puffergröße eines Netzwerkempfangspuffers sowie Netzwerksitzungssystem

Appareil et procédé permettant de déterminer la dimension du tampon d'une mémoire tampon de réception de réseau et système de session de réseau

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 JP 2012263881**

(43) Date of publication of application:
**04.06.2014 Bulletin 2014/23**

(73) Proprietor: **YAMAHA CORPORATION**
**Hamamatsu-shi**
**Shizuoka 430-8650 (JP)**

(72) Inventor: **Hara, Takahiro**
**Hamamatsu-shi, Shizuoka 430-8650 (JP)**

(74) Representative: **Ettmayr, Andreas et al**
**KEHL, ASCHERL, LIEBHOFF & ETTMAYR**
**Patentanwälte**
**Emil-Riedel-Strasse 18**
**80538 München (DE)**

(56) References cited:
**US-A1- 2010 265 834     US-A1- 2011 026 691**
**US-B1- 7 796 999**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present Invention relates to an art of determining buffer size of a network reception buffer used on a communication terminal such as an electronic musical instrument connected with a communication network such as Internet, and to a network session system in which the art of determining buffer size is used.

Description of the Related Art

Conventionally, there are known network session systems that enable musical sessions such as ensemble performance of musical instruments and chorus such as duet through a communication network such as Internet. In a network session system disclosed in Japanese Unexamined Patent Publication No. 2011-242560, for example, a terminal A transmits its own performance information to a partner terminal B, and also reproduces the performance information after a certain period of delay time, while the partner terminal B immediately reproduces the transmitted performance data, so that the performance information of the terminal A are reproduced by the terminals A and B at the same time.

Such transmission of performance data through a network involves fluctuations (variation with respect to time, also referred to as jitter) on intervals of transmission of data. In order to solve this problem, a document (Colin Perkins, Mastering TCP/IP RTP translated by Akimichi Ogawa (ohmsha, April 15, 2004) 160-161), for example, describes that (1) a reproduction buffer which is to receive packets received through the network will work appropriately by choosing a value which is quite larger than possible jitter as delay time to correct jitter, and (2) with the assumption that the frequency of occurrence of jitter with respect to packet arriving intervals is normally distributed, if a value obtained by tripling a standard deviation of packet arriving intervals is chosen as reproduction delay, abandoned packets will be 0.5% or less on the reproduction buffer.

However, the scheme (1) requires a sufficiently large safe buffer size. Although the scheme (1) is simple and stable, the scheme results in prolonged delay. Furthermore, the scheme (2) takes only jitter into account. Resultantly, although the buffer size has to be larger than "intervals of transmission" and "a size required at a time by a reproduction device of a reception terminal" at least, a buffer size of a case where the jitter is sufficiently small can be smaller than the above-described buffer size.

In other words, a terminal which is to receive and reproduce data needs to have a reception buffer of a certain buffer size so that the buffer can absorb jitter. However, an application for real-time music session, for example, which has strict requirements for delay requires to keep a buffer size as small as possible. However, there existed no network reception buffers which satisfy such contradictory requirements.

US 2010/265834 A1 and US 7,796,999 describe a technique according to the preamble part of the independent claims In US 2010/265834 A1 buffer size is adjusted according to settings of a communication session or analysis of actual or anticipated user behavior, whereas US 7,796,999 describes buffer adjustment based on features of a wireless communication device. None of these documents deals with adjusting buffer size based on parameters indicating actual network communication performance.

SUMMARY OF THE INVENTION

The present invention was accomplished to solve the above-described problem, and an object thereof is to provide a network reception buffer for a network session system which performs music sessions through a communication network such as Internet, the network reception buffer being able to have a most suitable buffer size that can adapt to network environment, minimize delay, and realize stable operation. As for the following descriptions about respective constituent features of the present invention, furthermore, reference letters of corresponding components of an embodiment described later are provided in parentheses to facilitate the understanding of the present invention. However, it should not be understood that the constituent features of the present invention are limited to the corresponding components indicated by the reference letters of the embodiment.

It is a feature of the present invention to provide an apparatus (SC) for determining buffer size of a network reception buffer (BF) which buffers data (di) received through a communication network (CN) and outputs the data to a reproduction device(9), the apparatus including counting means (CT) for counting the number of times the network reception buffer (BF) in which the data is accumulated becomes full or empty (the number of occurrence of full buffer or empty buffer); and buffer size adjusting means (S2 to S5) for adjusting buffer size (Tbf) of the network reception buffer (BF) in accordance with the number of times (the number of occurrence of full buffer or empty buffer) counted by the counting means (CT).

By the above-described feature of the invention, the number of times the network reception buffer (BF) in which the data is accumulated becomes full or empty (the number of occurrence of full buffer or empty buffer) is counted by the counting means. By the buffer size adjusting means, in addition, the buffer size (Tbf) is adjusted in accordance with the number of times counted by the counting means. According to the feature of the invention, therefore, the network reception buffer is able to have a most suitable buffer size that can adapt to network environment, minimize delay, and realize stable operation with the simple configuration.

It is preferred feature of the present invention that the counting means (CT), in response to start of communication, counts the number of times the network reception buffer (BF) in which the data is accumulated becomes full or empty (the number of occurrence of full buffer or empty buffer) during a certain period of time (Tr). In this case, the certain period of time (Tr) is 5 seconds, for example. The feature of the invention enables to have the network reception buffer of a buffer size that can adapt to network environment to realize the most suitable buffering in a short period of time after the start of communication, with the simple configuration.

It is a further preferred feature of the present invention that the buffer size adjusting means extends the buffer size (Tbf) when the number of times (the number of occurrence of full buffer or empty buffer) counted by the counting means (CT) is a certain value (N) or more (S2 to S4), whereas the buffer size adjusting means decides the buffer size (Tbf) without adjusting the buffer size when the counted number of times is less than the certain value(N) (S2=NO-> S5). Furthermore, the buffer size adjusting means may stop adjusting the buffer size (Tbf) when the number of times counted by the counting means (CT) is the certain value (N) or more even though the network reception buffer has been extended to the maximum buffer size (Tbfm) (S2=YES->S3=YES->S6). By this feature, the buffer size can be adjusted most appropriately in a short period of time by simple processing. By this feature, furthermore, in a case where the network reception buffer cannot have the most suitable buffer size, the adjustment is stopped immediately, but a user can try the adjustment of buffer size (Tbf) again by modifying the settings.

The embodiment of the present invention is not limited to the apparatus for determining buffer size of the network reception buffer, but the invention can be embodied as inventions of a method of determining buffer size of the network reception buffer and a computer program for determining buffer size of the network reception buffer. Furthermore, the present invention can be also embodied as an invention of a network session system including the apparatus for determining buffer size of the network reception buffer.

BRIEF DESCRIPTION OF THE DRAWINGS

FIG. 1 indicates a network configuration of a network session system according to an embodiment of the present invention;
FIG. 2 is a hardware configuration of each session terminal TM (electronic musical instrument or PC) of the network session system according to the embodiment of the invention;
FIG. 3 is one part of a diagram describing functions of a network reception buffer according to the embodiment of the invention;

FIG. 4 is the other part of the diagram describing the functions of the network reception buffer according to the embodiment of the invention;
FIG. 5 is a diagram illustrating determination of buffer size according to the embodiment of the invention; and
FIG. 6 indicates an example operation of a buffer size determination process carried out in a buffer control portion according to the embodiment of the invention.

DESCRIPTION OF THE PREFERRED EMBODIMENT

[Overview of System Configuration]

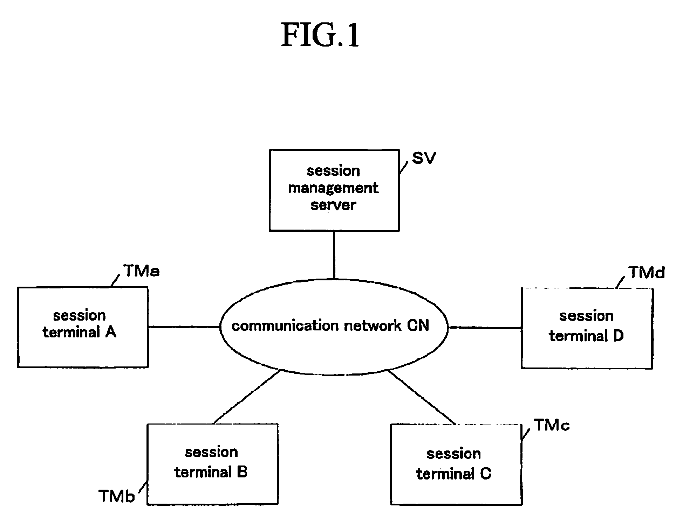

FIG. 1 indicates a configuration of the network session system according to the embodiment of the present invention. The network session system is formed of a session management server SV and a plurality of session terminals TMa to TMd (the letters "TM" represent a session terminal). The session management server SV and the session terminals TMa to TMd are connected to a communication network CN, respectively.

The session management server SV assists connections between the member session terminals TM. For instance, the session management server SV makes arrangements for connections between the respective session terminals TM before starting a session. After the establishment of the connections between the session terminals TM such as the session terminals TMa to TMd, performance information such as audio data is transmitted and received between the session terminals TMa to TMd without the session management server SV. Because the operation of the session management server SV is well-known, detailed operation of the session management server SV will not be explained in this description. The session terminals TMa to TMd which serve as network session members are electronic musical apparatuses which are capable of playing a musical instrument or karaoke. FIG. 1 indicates four session terminals TM (session members) as an example. However, the number of session terminals TM is not limited to four (the number of session terminals TM can be greater and smaller than four).

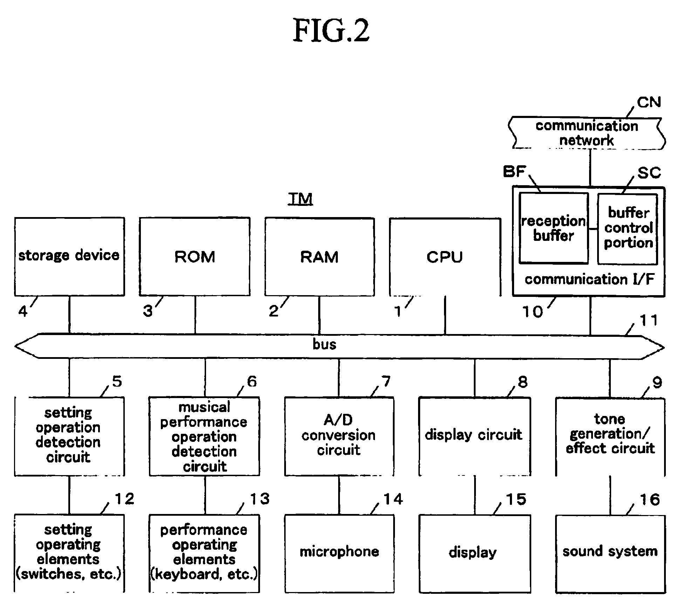

FIG. 2 is a block diagram indicative of an example hardware configuration of the session terminals which form the network session system. Each session terminal TM which makes up the network session system according to the embodiment of the invention is a kind of computer having a capability of electronically processing music information, and can be an electronic musical instrument or an electronic musical apparatus such as a personal computer (PC) on which a musical information processing application has been installed. As indicated in the figure, the session terminal TM has a central processing unit (CPU) 1, a random-access memory (RAM) 2, a read-only memory (ROM) 3, a storage device 4, a setting operation detection circuit 5, a musical performance operation detection circuit 6, an analog-to-digital (A/D) conversion circuit 7, a display circuit 8, a tone generation/effect circuit 9, a communication interface (I/F) 10 and the like, with these components 1 to 10 being connected with each other via a bus 11.

The CPU 1 serves as a data processing portion along with the RAM 2 and the ROM 3 to control the other components 4 to 10 in accordance with control programs including a buffer size determination program to carry out various kinds of information processing including buffer size determination processing. The RAM 2 is used as a storage management area for retaining data necessary for the processing so that the data can be used, and a working area for temporarily storing various kinds of data. In the ROM 3, the various control programs and preset data are previously stored in order to execute various kinds of processing.

The storage device 4 includes various storage media such as HD (hard disk), FD (flexible disk), CD (compact disk), DVD (digital versatile disk) and semiconductor memory such as flash memory, and their drives so that desired control programs including the buffer size determination program and performance data can be stored in desired media. These storage media may be either detachable or incorporated in the session terminal TM.

The setting operation detection circuit 5 serves as a setting operating portion (panel operating portion) along with setting operating elements (panel operating elements) 12 such as switches and a mouse to detect user's operation of the setting operating elements 12 to supply setting operation information corresponding to the setting operation to the data processing portion (1 to 3), while the data processing portion makes various settings in accordance with the setting operation information. The musical performance operation detection circuit 6 serves as a musical instrument performance inputting portion along with performance operating elements 13 such as a keyboard to detect terminal user's operation of the performance operating elements 13 to supply performance operation information corresponding to the performance operation to the data processing portion, while the data processing portion transmits performance data based on the performance operation information to the tone generation/effect circuit 9.

The A/D conversion circuit 7 serves as a vocal inputting portion along with a microphone 14 to convert vocal sound signals input through the microphone 14 by the terminal user's vocal performance to digital signals to supply the digital signals to the data processing portion, while the data processing portion transmits audio data based on the digital vocal sound signals to an effect portion of the tone generation/effect circuit 9. The display circuit 8 has a display 15 such as an LCD for displaying various kinds of screens necessary for various settings and performance input such as musical instrument performance and vocal performance, and indicators/lamps (not shown) to control display and illumination of the display 15 and the Indicators/lamps in accordance with instructions made by the data processing portion to provide visual guidance on the settings and performance input.

The tone generation/effect circuit 9 has a tone generating portion for generating audio data in accordance with performance data, and an effect portion including a DSP for carrying out various kinds of audio data processing. For instance, the tone generating portion generates audio data in accordance with performance data obtained from performance operation information supplied from the musical performance operation detection circuit 6 or performance data obtained from the ROM 3, the storage device 4 or the communication I/F 10, while the effect portion adds effects to audio data supplied from the microphone 14, audio data generated by the tone generating portion, or audio data obtained through the communication I/F 10 or the like and mixes the audio data to generate audio output data. A sound system 16 includes a D/A converting portion, an amplifier, speakers (including a headphone) and the like, and generates musical tones (musical tones played by musical instruments and vocals) based on the audio output data supplied from the tone generation/effect circuit 9. The effect portion of the tone generation/effect circuit 9 and the sound system 16 function as an audio reproduction portion (also referred to as reproduction device or data reproduction portion).

The communication I/F 10 includes one or more of a general short-distance wired I/F such as IEEE 1394, a general network I/F such as Ethernet (trademark), and a general short-distance wireless I/F such as wireless LAN and Bluetooth (trademark) to allow to exchange audio data between the other session terminals via a communication network CN such as Internet and to receive control programs and data from external apparatuses such as a server computer to store the received programs and data in the storage device 4. A data reception portion of the communication I/F 10 has a network reception buffer (also simply referred to as a reception buffer) BF for buffering audio data transmitted from a different session terminal and supplying the audio data to the effect portion (reproduction device, data reproduction portion) of the tone generation/effect circuit 9, and a buffer control portion SC which monitors the state of the reception buffer BF and optimally controls the reception buffer BF under instructions from the data processing portion (1 to 3).

In a case where an electronic musical instrument is used as a session terminal TM without karaoke, the vocal inputting portion 14, 7 is not necessary. In a case where a PC having a music information processing application is used as a session terminal TM in order to perform only karaoke, the musical instrument performance inputting portion 13, 6 is not necessary. Although the session management server SV has a hardware configuration which is almost similar to FIG. 2, the session management server SV does not need the musical instrument performance inputting portion 13, 6 and the audio reproduction portion 9, 16.

[Functions of Reception Buffer]

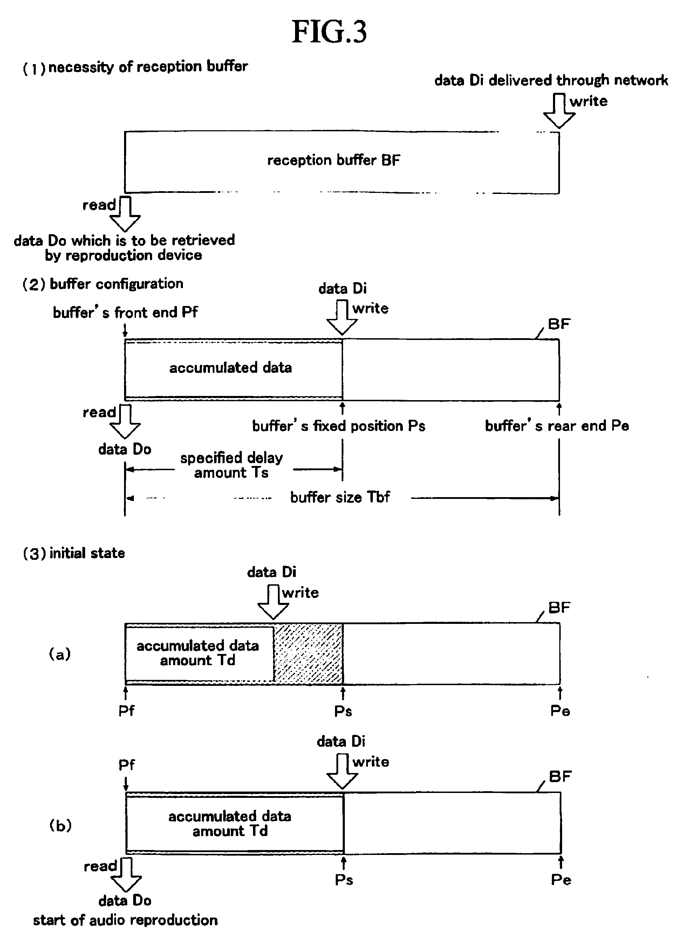

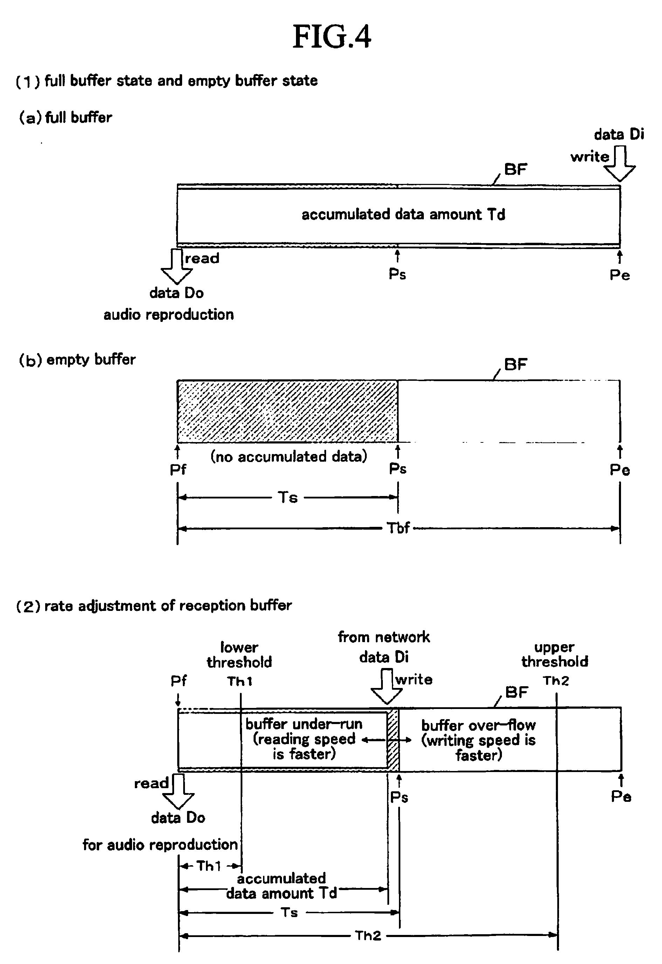

FIG. 3 and FIG. 4 indicate schematic diagrams indicative of functions of the network reception buffer according to the embodiment of the invention. As indicated in FIG. 3(1), the network reception buffer BF provided for the data reception portion (10) of one session terminal such as the terminal TMa buffers audio data Di transmitted through the communication network CN from a partner session terminal, the terminal TMb, for example, and outputs buffered audio data Do to the reproduction device (the effect portion of the tone generation/effect circuit 9).

More specifically, the data Di supplied from the network CN to the buffer BF is transmitted with intervals specified in accordance with settings defined between the partner terminal TMb, whereas the data Do which the reproduction device obtains from the buffer BF to reproduce the data Do is obtained with intervals specified on the reproduction device side. Therefore, the intervals and timing of the supplied data Di do not necessarily coincide with the intervals and timing of the data Do which will be reproduced. In addition, because there exist data fluctuations (jitter or variation with respect to time, hereafter referred to as jitter) on network, it is necessary to have some allowances. Therefore, the received data Di is written into the reception buffer BF to temporarily store the received data Di, so that the stored data Di is read out to be output as data Do to the reproduction device at timing corresponding to the processing performed by the reproduction device in the order in which the data has been buffered. In this case, delay time can be adjusted in accordance with the size (Tbf) of the buffer BF determined by the buffer control portion SC.

The reception buffer BF basically operates so that the amount of buffer in a steady state, that is, the data amount (Td) accumulated in the buffer BF can be a previously specified amount of delay Ts, as indicated in FIG. 3(2). In a case where the buffer BF operates as specified, in other words, the latest data Di is written on a "buffer's fixed position Ps" corresponding to the specified delay amount Ts, with the top data Do being read out from the front end Pf of the buffer BF, as indicated in the figure. In this figure, the "buffer size Tbf" is equivalent, in terms of time, to the maximum data amount that can be accumulated in the buffer BF ranging from the front end Pf to an rear end Pe of the buffer BF. A ring buffer is used as the reception buffer BF, so that a write position, a read position, and a data-accumulated area can vary dynamically on the ring buffer. By fixing the read position at the front end Pf, however, the buffer BF can be schematically represented as FIG. 3 and FIG. 4.

In this case, jitter on a network can temporarily increase the amount of accumulated data. Therefore, allowance should be made in front of and behind the fixed position Ps of the buffer BF. The buffer size Tbf is determined by multiplying the specified delay amount Ts by a predetermined coefficient Ks (e.g., Ks=2.5) as indicated in equation 1:

$$\text{Tbf}=\text{Ks}\times\text{Ts} \quad \ldots \text{equation 1}$$

FIG. 3(3)(a) schematically indicates progression of data accumulation in the buffer BF starting with an initial state of accumulated data amount Td=0 to start reception and writing of data Di from the partner terminal TM over the network CN to gradually accumulate data in the buffer. As indicated in FIG. 3(3)(b), when the accumulated data reaches the fixed position Ps, that is, the specified delay amount Ts (Ts=Td), the buffer BF finally starts reading the data Do, so that the reproduction device starts audio reproduction on the basis of the data Do.

Normally, both the reception (write) of the data Di through the network CN and the audio reproduction (read) by the reproduction device are performed in the same rate (audio of 44,100 kHz). Therefore, the accumulated data amount steadily reaches the vicinity of the fixed position Ps to enable buffering of the specified delay amount Ts.

In a case where the value of the buffer size Tbf is small, however, jitter arising depending on transmission state of the network CN can cause data Di to rush to the buffer BF faster than the audio reproduction. As a result, the accumulated data amount Td occupies the entire buffer size Tbf, so that new data Di cannot be written into the buffer BF to end up with rejection of the new data Di, as indicated in FIG. 4(1)(a). Such a state where the accumulated data has reached the rear end Pe of the buffer BF to occupy the buffer BF to capacity is referred to as "full buffer" or simply referred to as "fullness". Conversely, in a case where intervals of incoming data Di are prolonged due to jitter, the buffer BF becomes empty of accumulated data, as indicated in FIG. 4(1)(b), to fail to deliver data Do to the reproduction side. Such a state where the data Di has not been supplied to the buffer BF fast enough to enable the reproduction to end up with empty buffer BF is referred to as "empty buffer" or simply referred to as "emptiness".

<Rate Adjustment of Reception Buffer>

In a case where the network reception buffer BF receives audio data Di in accordance with a communication scheme such as RTP (Real-time Transport Protocol), there arises a subtle difference between the data rate of received audio data Di and the data rate of audio data Do requested by the reproduction device. In a case where the reading rate of data Do is faster than the rate of data Di, for example, the difference causes a buffer under-run state. In a case where the writing rate of data Di is faster than the reading rate of data Do, on the other hand, the difference causes a buffer overflow state. Because such states lead the buffer BF to either emptiness or fullness, the buffer control portion SC adjusts input rate at regular intervals. In this case, in order to reduce influence of temporal increase or decrease in buffered amount brought about by network jitter, thresholds are provided, as indicated in FIG. 4(2), to monitor the data accumulation to have "allowance" in rate adjustment.

In front of and behind the fixed position Ps of the buffer, more specifically, a lower threshold Th1 and an upper threshold Th2 are provided, respectively. Therefore, if the accumulated data amount Td leaves the fixed position Ps to reach either the lower threshold Th1 or the upper threshold Th2, samples which are to be reproduced are added or removed by the number of insufficient samples or of redundant samples corresponding to the thresholds, respectively. More specifically, threshold time T1 or T2 taken from the time at which the buffer had previously reached the fixed position Ps to the time at which the buffer has reached the lower threshold Th1 or upper threshold Th2, respectively, is recorded to add or remove samples so that the buffer can return to the fixed position Ps in time T1/2 or T2/2 each of which is half of the threshold time T1, T2. The reason why the set time is half the threshold time is that if it took the same amount of time as the threshold time to return to the fixed position, the addition or removal of samples could not catch up with the decrease or increase in the accumulated data amount Td to fail to return to the fixed position Ps (specified delay amount Ts).

In a case where the interval between the fixed position Ps and the upper threshold Th2 of the buffer is 100 samples, for example, with the buffer taking T2=50000 sample time to reach from the fixed position Ps to the upper threshold Th2, 100 samples are to be removed during T2/2=25000 sample time which is half the 50000 sample time. In other words, one sample is to be removed for every 250 samples.

[Automatic Adjustment of Buffer Size]

The buffer size of the network reception buffer according to the embodiment of the invention can be dynamically changed. More specifically, the buffer size Tbf of the network reception buffer BF is specified not by a user but by a buffer size automatic adjustment capability of the buffer control portion SC. By the automatic adjustment capability, the buffer size Tbf is automatically set at a value which is as small as possible but will not raise any problem.

The audio reproduction portion starts reproduction on the basis of the data Do output from the network reception buffer BF when data has accumulated to reach the fixed position Ps in the buffer BF. Therefore, it is supposed that there is space in front of and behind the fixed position Ps of the buffer BF. Furthermore, when the accumulated data amount Td has exceeded the threshold Th1 or Th2, the rate adjustment capability is exerted on the buffer BF. In a case where even the rate adjustment is not sufficient to end up with the full buffer in which data has reached the currently set rear end Pe of the buffer BF as indicated in FIG. 4(1)(a) or the empty buffer in which the buffer BF is empty as indicated in FIG. 4(1)(b), there is a high possibility that the buffer size Tbf is not adequate but is too small in the first place.

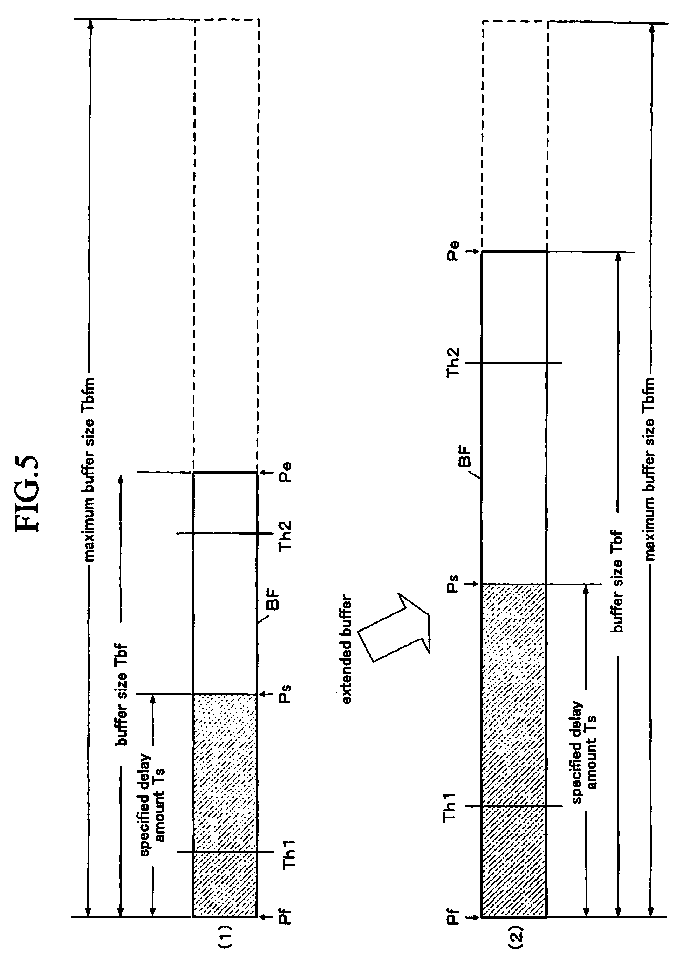

Therefore, when it is judged by the monitoring of data accumulation that the network reception buffer BF is in abnormal conditions due to inadequate current buffer size Tbf to cause full buffer or empty buffer, the buffer size Tbf is largely extended as indicated in FIG. 5. Then, the monitoring of data accumulation of the buffer BF is carried out again. More specifically, the automatic adjustment in which the monitoring of data accumulation and the extension of the buffer size are repeated is carried out until the abnormal conditions are resolved. Resultantly, an adequate buffer size Tbf is automatically determined.

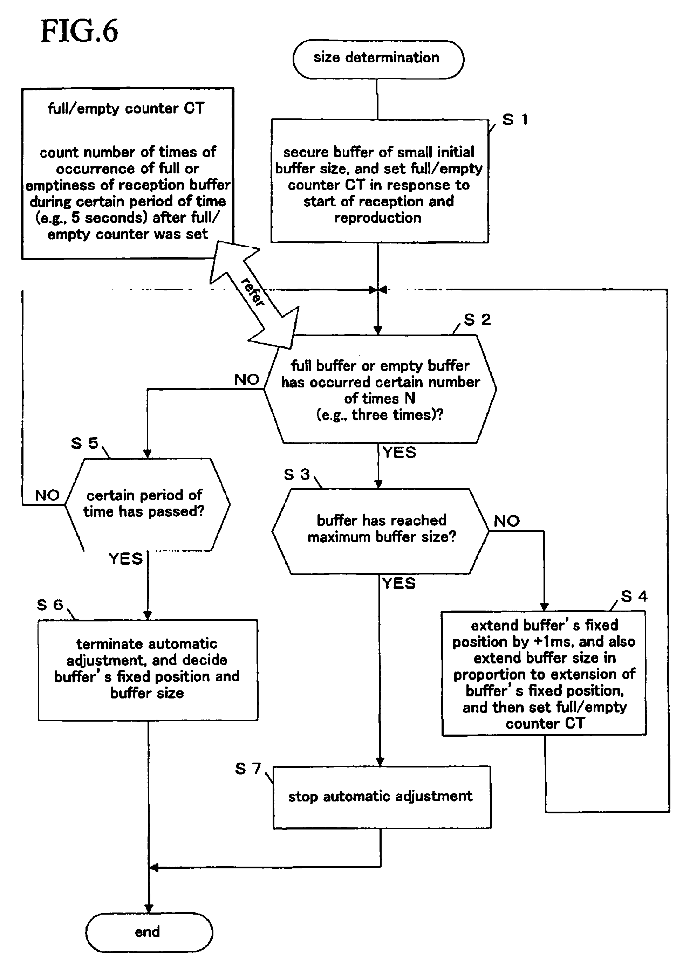

For the monitoring of data accumulation, a full/empty counter (FIG. 6: CT) for counting the number of occurrence of full buffer or empty buffer is set. In a case where the abnormal conditions have not been resolved despite repeated extension of buffer size Tbf to the maximum buffer size Tbfm, the automatic adjustment is stopped.

For extension of the buffer size Tbf, the fixed position Ps, that is, the specified delay amount Ts of the buffer is extended by a specified amount, with the buffer size Tbf being also extended in proportion to the extension of the specified delay amount Ts, as indicated in the figure. In a case where the rate adjustment is also carried out, the thresholds Th1 and Th2 are also extended in proportion to the extension of the buffer size Tbf. The maximum buffer size Tbfm is determined on the basis of an initial buffer size Tbf0. More specifically, the maximum buffer size Tbfm is set at a value obtained, for example, by multiplying the initial buffer size Tbf0 by a certain coefficient Kb (e.g., Kb=2.5) as indicated in the following equation 2:

$$Tbfm = Kb \times Tbf0 \quad \ldots equation\ 2$$

More specifically, the automatic buffer size adjustment is performed by the following procedures (1) to (7):

(1) The network reception buffer BF is provided with the initial buffer size Tbf0 of a small buffer size (e.g., a few milliseconds). In other words, the initial buffer size Tbf0 is a small value, but has to be greater than intervals at which the terminal TM receives packets from the partner terminal TM and intervals at which data for reproduction is supplied to the audio device of the terminal TM at least.

(2) In response to the start of reception by the data reception portion (10) and reproduction by the audio reproduction portion (9), the automatic buffer size adjustment is started to set the full/empty counter (CT) to start counting. The automatic buffer size adjustment may be started by user's instruction.

(3) After being set, the full/empty counter (CT) counts the number of occurrence of full or emptiness of the reception buffer BF during a certain period of time Tr (e.g., Tr=5seconds).

(4) When the certain period of time Tr has passed after the setting of the full/empty counter (CT), the counted value (the number of occurrence of full or emptiness) of the full/empty counter (CT) is referred to.

(5) In a case where it is judged by the reference to the counted value (the number of occurrence of full or emptiness) of the full/empty counter (CT) that a predetermined number N (e.g., N= three times) or more of full or emptiness has occurred during the certain period of time Tr, the fixed position Ps (the specified delay amount Ts) of the buffer is extended by a predetermined amount of delay ΔTs (e.g., ΔTs=1 millisecond), with the buffer size Tbf, the lower and upper thresholds Th1 and Th2 being also extended in proportion to the extension of the buffer as indicated in FIG. 5. In addition, the full/empty counter (CT) is set. Then, the procedures return to (3).

(6) In a case where it is judged by the reference to the counted value (the number of occurrence of full or emptiness) of the full/empty counter (CT) that the number of occurrence of full or emptiness is less than the predetermined number of occurrence N, the automatic adjustment is terminated, with the fixed position Ps (the specified delay amount Ts), the buffer size Tbf, the lower and upper thresholds Th1 and Th2 of the buffer being decided.

(7) In a case where it is judged by the reference to the counted value (the number of occurrence of full or emptiness) of the full/empty counter (CT) that the predetermined number N or more of full or emptiness has occurred even though the buffer size Tbf had been extended to the maximum buffer size Tbfm, the automatic adjustment is stopped. In this case, the automatic buffer size adjustment can be performed again after changes in various setting values by user's manipulation or after a lapse of a certain amount of time.

The above-described procedures (1) to (7) can be carried out again at user's desired timing. Furthermore, the various setting values (e.g., Ks, Kb, Tbf0, Tbfm, Tr, N, ΔTs, etc.) on the automatic buffer size adjustment can be changed to user's desired values within certain limited ranges, respectively.

Furthermore, the reception buffer BF may be configured such that procedures (1) to (7) are automatically reiterated at certain timing in order to suit the latest conditions. The timing can be the timing when a silence was detected (the timing will not affect sound in spite of changes in buffer size), the timing of certain intervals, or the timing when a certain change in network conditions (e.g., the width of jitter is broadened due to busy lines) was detected.

[Example Operation]

FIG. 6 indicates an example operation of the buffer size determination process carried out in the buffer control portion according to the embodiment of the invention. In other words, FIG. 6 is a flowchart of a program executed by the data processing portion (computer portion) formed of the CPU 1, the RAM 2 and the ROM 3. A block CT situated at the upper-left in the figure indicates the full/empty counter provided on the buffer control portion SC. The full/empty counter CT is set under the control by the CPU 1 when the session terminal TM starts communicating with a different terminal TM, or when the buffer is extended (S4). After being set, the full/empty counter counts the number of occurrence of full or emptiness of the reception buffer BF during a certain period of time Tr (e.g., 5 seconds). After the start of the buffer size determination process, at the first step S1 under the control by the CPU 1, the buffer control portion SC secures a buffer previously provided with a small value as initial buffer size Tbf0, and sets the full/empty counter CT in response to start of reception by the data reception portion (10) and reproduction by the audio reproduction portion (9) in accordance with the start of communication between the session terminal TM and the different terminal TM. Then, the process proceeds to step S2.

At step S2, the counted result of the full/empty counter CT is referred to to determine whether or not the full buffer or the empty buffer has occurred the certain number of times N (e.g., three times) or more. If it is determined that it occurred the certain number of times N or more (S2=YES), the process proceeds to step S3 to determine whether or not the currently set buffer size Tbf has reached the maximum buffer size Tbfm. If it is determined that the buffer size Tbf has not reached the maximum buffer size Tbfm (S3=NO), the process proceeds to step S4.

At step S4, the fixed position Ps, that is, the specified delay amount Ts of the buffer is set at a value obtained by extending the specified delay amount Ts by the certain delay amount ΔTs (e.g., +1 ms), with the buffer size Tbf also being set at a value obtained by extending by the certain amount in proportion to the extension of the specified delay amount Ts. At step S4, furthermore, the full/empty counter CT is set again. In a case where the rate adjustment is also carried out, furthermore, the lower and upper thresholds Th1 and Th2 are also extended in proportion to the extension of the specified delay amount Ts. After step S4, the process returns to step S2. As long as the full buffer or the empty buffer occurs N times or more despite extension of the buffer size Tbf (S2=YES) without the extended buffer size Tbf reaching the maximum buffer size Tbfm (S3=NO), the automatic adjustment by steps S2 to S4 is repeated to extend the specified delay amount Ts by ΔTs at each extension (S4).

If it is judged at step S2 that the occurrence of the full buffer or the empty buffer is 0 or less than N times (e.g., 0 to 2 times) (S2=NO), the process proceeds to step S5 to judge whether the certain period of time Tr has passed or not. If not (S5=NO), the process returns to step S2. If it is judged at step S5 that the certain period of time Tr has passed, with the occurrence of the full buffer or the empty buffer being less than N times (S5=YES), the process proceeds to step S6 to terminate the automatic adjustment to decide the fixed position Ps, that is, the specified delay amount Ts and the buffer size Tbf of the buffer at values set at that moment. Then, the currently performed buffer size determination process is terminated.

If it is judged at step S3 that the current buffer size Tbf has reached the maximum buffer size Tbfm (S3=YES), the process proceeds to step S7 to stop the automatic adjustment, and terminates the currently performed buffer size determination process.

As explained above, the buffer size determination system (SC) according to the embodiment of the invention is provided for each of the session terminals TMa to TMd which make up a network session system and are connected with each other via the communication network CN to communicate with each other. On the network reception buffer BF which buffers data Di received through the communication network CN and outputs the data to the reproduction device (9), therefore, the number of times the buffer BF accumulating data has become full or empty in the certain period of time Tr (the number of occurrence of full or emptiness) is counted by the full/empty counter CT after the start of communication with a different session terminal TM to automatically adjust the buffer size Tbf in accordance with the counted occurrence of full/emptiness(S2 to S5). In a case where the number of occurrence of full/emptiness is N times or more, for example, the buffer size Tbf is extended, and in a case where the number of occurrence of full/emptiness is still N times or more even though the buffer size Tbf has been extended, the buffer size Tbf is extended again (S2 to S4). In a case where the number of occurrence of full/emptiness is less than N times, the current value of the buffer size Tbf is decided (S5). In a case where the number of occurrence of full/emptiness is N times or more even though the buffer size Tbf has extended to the maximum buffer size Tbfm, the automatic adjustment of the buffer size Tbf is stopped (S6). In this case, the automatic adjustment of the buffer size Tbf can be carried out again after the user has changed the settings.

[Various Modifications]

The embodiment of the present invention has been explained above. However, the above-described embodiment is a mere example. Therefore, the present invention can be variously modified without departing from the invention as defined in the appended claims. For instance, although the buffer size adjustment is performed by use both of the number of occurrence of full buffer and the number of occurrence of empty buffer in the above-described embodiment, the embodiment may be modified to use either of them.

In the above-described embodiment, furthermore, the initial buffer size (Tbf0) is set to be a small value for the automatic adjustment of buffer size (Tbf) so that the buffer size can be gradually extended by the automatic adjustment of buffer size (Tbf). However, the embodiment may be modified to have an initial buffer size (Tbf0) of a certain size so that the buffer size can be gradually decreased from the size by the automatic adjustment of buffer size. In this modification, more specifically, when the buffer BF has decreased to the lower threshold (Th1) or has not increased to the upper threshold (Th2) within a certain period of time, the buffer size (Tbf) is to be decreased. Furthermore, the embodiment may be modified to perform the automatic adjustment of buffer size in combination of the embodiment and the modification to expand or decrease buffer size in accordance with the number of occurrence of full buffer or empty buffer, and arrival at the lower or upper threshold (Th1, Th2).

**Claims**

1. An apparatus (SC) for determining buffer size (Tbf) of a network reception buffer (BF) which buffers data (di) received through a communication network (CN) and outputs the data to a reproduction device (9), the apparatus comprising buffer size adjusting means for adjusting buffer size (Tbf) of the network reception buffer (BF),
   **characterized in that**
   the apparatus further comprises counting means (CT) for counting the number of times the network reception buffer (BF) in which the data (di) is accumulated becomes full or empty;
   and **in that**
   the buffer size adjusting means are configured to adjust buffer size (Tbf) of the network reception buffer (BF) in accordance with the number of times counted by the counting means (CT).

2. The apparatus (SC) for determining buffer size (Tbf) of the network reception buffer (BF) according to claim 1, wherein
   the counting means (CT) are configured to count, in response to start of communication, the number of times the network reception buffer (BF) in which the data (di) is accumulated becomes full or empty during a certain period of time.

3. The apparatus (SC) for determining buffer size (Tbf) of the network reception buffer (BF) according to claim 1 or 2, wherein
   the buffer size adjusting means are configured to extend the buffer size (Tbf) when the number of times counted by the counting means (CT) is a certain value or more, whereas the buffer size adjusting means are configured to decide the buffer size (Tbf) without adjusting the buffer size (Tbf) when the counted number of times counted by the counting means (CT) is less than the certain value.

4. The apparatus (SC) for determining buffer size (Tbf) of the network reception buffer (BF) according to claim 3, wherein
the buffer size adjusting means are configured to stop adjusting the buffer size (Tbf) when the number of times counted by the counting means (CT) is the certain value or more even though the network reception buffer (BF) has been extended to the maximum buffer size.

5. A method for determining buffer size (Tbf) of a network reception buffer (BF) which buffers data (di) received through a communication network (CN) and outputs the data (di) to a reproduction device (9), the method comprising a buffer size adjusting step of adjusting buffer size (Tbf) of the network reception buffer (BF),
**characterized in that**
said method further comprises a counting step of counting the number of times the network reception buffer (BF) in which the data (di) is accumulated becomes full or empty; and **in that** the buffer size adjusting step adjusts buffer size of the network reception buffer (BF) in accordance with the number of times counted by the counting step.

6. The method for determining buffer size (Tbf) of the network reception buffer (BF) according to claim 5, wherein
the counting step, in response to start of communication, counts the number of times the network reception buffer (BF) in which the data (di) is accumulated becomes full or empty during a certain period of time.

7. The method for determining buffer size (Tbf) of the network reception buffer (BF) according to claim 5 or 6, wherein
the buffer size adjusting step extends the buffer size (Tbf) when the number of times counted by the counting step is a certain value or more, whereas the buffer size adjusting step decides the buffer size (Tbf) without adjusting the buffer size (Tbf) when the counted number of times counted by the counting step is less than the certain value.

8. The method for determining buffer size (Tbf) of the network reception buffer (BF) according to claim 7, wherein
the buffer size adjusting step stops adjusting the buffer size (Tbf) when the number of times counted by the counting step is the certain value or more even though the network reception buffer (BF) has been extended to the maximum buffer size.

9. A computer program for determining buffer size (Tbf) of a network reception buffer (BF) which buffers data (di) received through a communication network (CN) and outputs the data to a reproduction device (9), the computer program comprising a buffer size adjusting step of adjusting buffer size (Tbf) of the network reception buffer (BF),
**characterized in that**
said computer program further comprises a counting step of counting the number of times the network reception buffer (BF) in which the data (di) is accumulated becomes full or empty;
and **in that**
said buffer size adjusting step adjustsbuffer size (Tbf) of the network reception buffer (BF) in accordance with the number of times counted by the counting step.

10. A network session system formed of a plurality of session terminals connected with each other such that the session terminals can communicate with each other through a communication network (CN), wherein
each session terminal has an apparatus (SC) for determining buffer size (Tbf) of a network reception buffer (BF) which buffers data received through the communication network (CN) and outputs the data (di) to a data reproduction device (9); and
the apparatus (SC) for determining buffer size (Tbf) has buffer size adjusting means for adjusting buffer size (Tbf) of the network reception buffer (BF),
**characterized in that**
the apparatus (SC) further has counting means (CT) for counting the number of times the network reception buffer (BF) in which the data is accumulated becomes full or empty; and said buffer size adjusting means are configured to adjust buffer size (Tbf) of the network reception buffer (BF) in accordance with the number of times counted by the counting means (CT).

**Patentansprüche**

1. Vorrichtung (SC) zum Bestimmen einer Puffergröße (Tbf) eines Netzwerkempfangspuffers (BF), der Daten (di) puffert, die über ein Kommunikationsnetz (CN) empfangen wurden, und die Daten an eine Reproduktionsvorrichtung (9) ausgibt, wobei die Vorrichtung Puffergrößeneinstellmittel zum Einstellen der Puffergröße (Tbf) des Netzwerkempfangspuffers (BF) aufweist,

   **dadurch gekennzeichnet, dass**
   die Vorrichtung ferner Zählmittel (CT) zum Zählen der Anzahl von Malen aufweist, die der Netzwerkempfangspuffer (BF), in dem die Daten (di) angesammelt werden, voll oder leer wird; und dass die Puffergrößeneinstellmittel dazu konfiguriert sind, die Puffergröße (Tbf) des Netzwerkempfangspuffers (BF) gemäß der Anzahl von Malen einzustellen, die von den Zählmitteln (CT) gezählt wurde.

2. Vorrichtung (SC) zum Bestimmen der Puffergröße (Tbf) des Netzwerkempfangspuffers (BF) gemäß Anspruch 1, wobei

die Zählmittel (CT) dazu konfiguriert sind, in Reaktion auf einen Beginn einer Kommunikation die Anzahl von Malen zu zählen, die der Netzwerkempfangspuffer (BF), in dem die Daten (di) angesammelt werden, über einen bestimmten Zeitraum voll oder leer wird.

3. Vorrichtung (SC) zum Bestimmen der Puffergröße (Tbf) des Netzwerkempfangspuffers (BF) gemäß Anspruch 1 oder 2, wobei

die Puffergrößeneinstellmittel dazu konfiguriert sind, die Puffergröße (Tbf) zu erweitern, wenn die Anzahl von Malen, die von den Zählmitteln (CT) gezählt wurde, ein bestimmter Wert oder größer ist, während die Puffergrößeneinstellmittel dazu konfiguriert sind, die Puffergröße (Tbf) zu entscheiden, ohne die Puffergröße (Tbf) einzustellen, wenn die gezählte Anzahl von Malen, die von den Zählmitteln (CT) gezählt wurde, kleiner als der bestimmte Wert ist.

4. Vorrichtung (SC) zum Bestimmen der Puffergröße (Tbf) des Netzwerkempfangspuffers (BF) gemäß Anspruch 3, wobei

die Puffergrößeneinstellmittel dazu konfiguriert sind, das Einstellen der Puffergröße (Tbf) zu beenden, wenn die Anzahl von Malen, die von den Zählmitteln (CT) gezählt wurde, der bestimmte Wert oder größer ist, selbst wenn der Netzwerkempfangspuffer (BF) auf die maximale Puffergröße erweitert wurde.

5. Verfahren zum Bestimmen einer Puffergröße (Tbf) eines Netzwerkempfangspuffers (BF), der Daten (di) puffert, die über ein Kommunikationsnetz (CN) empfangen wurden, und die Daten an eine Reproduktionsvorrichtung (9) ausgibt, wobei das Verfahren einen Puffergrößeneinstellschritt zum Einstellen einer Puffergröße (Tbf) des Netzwerkempfangspuffers (BF) aufweist,

**dadurch gekennzeichnet, dass**

das Verfahren ferner einen Zählschritt zum Zählen der Anzahl von Malen aufweist, die der Netzwerkempfangspuffer (BF), in dem die Daten (di) angesammelt werden, voll oder leer wird, aufweist; und dass der Puffergrößeneinstellschritt die Puffergröße des Netzwerkempfangspuffers (BF) gemäß der Anzahl von Malen einstellt, die von dem Zählschritt gezählt wurde.

6. Verfahren zum Bestimmen der Puffergröße (Tbf) des Netzwerkempfangspuffers (BF) gemäß Anspruch 5, wobei

der Zählschritt in Reaktion auf einen Beginn einer Kommunikation die Anzahl von Malen zählt, die der Netzwerkempfangspuffer (BF), in dem die Daten (di) angesammelt werden, über einen bestimmten Zeitraum voll oder leer wird.

7. Verfahren zum Bestimmen der Puffergröße (Tbf) des Netzwerkempfangspuffers (BF) gemäß Anspruch 5 oder 6, wobei

der Puffergrößeneinstellschritt die Puffergröße (Tbf) erweitert, wenn die Anzahl von Malen, die von dem Zählschritt gezählt wurde, ein bestimmter Wert oder größer ist, während der Puffergrößeneinstellschritt die Puffergröße (Tbf) entscheidet, ohne die Puffergröße (Tbf) einzustellen, wenn die gezählte Anzahl von Malen, die von dem Zählschritt gezählt wurde, kleiner als der bestimmte Wert ist.

8. Verfahren zum Bestimmen der Puffergröße (Tbf) des Netzwerkempfangspuffers (BF) gemäß Anspruch 7, wobei

der Puffergrößeneinstellschritt das Einstellen der Puffergröße (Tbf) beendet, wenn die Anzahl von Malen, die von dem Zählschritt gezählt wurde, der bestimmte Wert oder größer ist, selbst wenn der Netzwerkempfangspuffer (BF) auf die maximale Puffergröße erweitert wurde.

9. Computerprogramm zum Bestimmen einer Puffergröße (Tbf) eines Netzwerkempfangspuffers (BF), der Daten (di) puffert, die über ein Kommunikationsnetz (CN) empfangen wurden, und die Daten an eine Reproduktionsvorrichtung (9) ausgibt, wobei das Computerprogramm einen Puffergrößeneinstellschritt zum Einstellen einer Puffergröße (Tbf) des Netzwerkempfangspuffers (BF) aufweist,

**dadurch gekennzeichnet, dass**
das Computerprogramm ferner einen Zählschritt zum Zählen der Anzahl von Malen aufweist, die der Netzwerkempfangspuffer (BF), in dem die Daten (di) angesammelt werden, voll oder leer wird; und dass

der Puffergrößeneinstellschritt die Puffergröße des Netzwerkempfangspuffers (BF) gemäß der Anzahl von Malen einstellt, die von dem Zählschritt gezählt wurde.

10. Netzwerksitzungssystem, das aus mehreren Sitzungsendgeräten ausgebildet ist, die miteinander verbunden sind, sodass die Sitzungsendgeräte über ein Kommunikationsnetz (CN) miteinander kommunizieren können, wobei

jedes Sitzungsendgerät eine Vorrichtung zum Bestimmen einer Puffergröße (Tbf) eines Netzwerkempfangspuffers (BF) aufweist, der Daten puffert, die über das Kommunikationsnetz (CN) empfangen wurden, und die Daten (di) an eine Reproduktionsvorrichtung (9) ausgibt, und die Vorrichtung (SC) zum Bestimmen der Puffergröße (Tbf) Puffergrößeneinstellmittel zum Einstellen der Puffergröße (Tbf) des Netzwerkempfangspuffers (BF) aufweist,
**dadurch gekennzeichnet, dass**
die Vorrichtung (SC) ferner Zählmittel (CT) zum Zählen der Anzahl von Malen aufweist, die der Netzwerkempfangspuffer (BF), in dem die Daten angesammelt werden, voll oder leer wird; und
die Puffergrößeneinstellmittel dazu konfiguriert sind, die Puffergröße (Tbf) des Netzwerkempfangspuffers (BF) gemäß der Anzahl von Malen einzustellen, die von den Zählmitteln (CT) gezählt wurde.

**Revendications**

1. Appareil (SC) de détermination de capacité de mémoire tampon (Tbf) d'une mémoire tampon de réception de réseau (BF) qui met en mémoire tampon des données (di) reçues via un réseau de communication (CN) et fournit en sortie les données à un dispositif de reproduction (9), l'appareil comprenant des moyens d'ajustement de capacité de mémoire tampon permettant d'ajuster une capacité de mémoire tampon (Tbf) de la mémoire tampon de réception de réseau (BF),
**caractérisé en ce que**
l'appareil comprend en outre des moyens de comptage (CT) permettant de compter le nombre de fois où la mémoire tampon de réception de réseau (BF) dans laquelle les données (di) sont accumulées se remplit ou se vide ;
et **en ce que**
les moyens d'ajustement de capacité de mémoire tampon sont configurés pour ajuster la capacité de mémoire tampon (Tbf) de la mémoire tampon de réception de réseau (BF) en conformité avec le nombre de fois compté par les moyens de comptage (CT).

2. Appareil (SC) de détermination de capacité de mémoire tampon (Tbf) de la mémoire tampon de réception de réseau (BF) selon la revendication 1, dans lequel
les moyens de comptage (CT) sont configurés pour compter, en réponse à un début de communication, le nombre de fois où la mémoire tampon de réception de réseau (BF) dans laquelle les données (di) sont accumulées se remplit ou se vide pendant une certaine période de temps.

3. Appareil (SC) de détermination de capacité de mémoire tampon (Tbf) de la mémoire tampon de réception de réseau (BF) selon la revendication 1 ou 2, dans lequel
les moyens d'ajustement de capacité de mémoire tampon sont configurés pour étendre la capacité de mémoire tampon (Tbf) lorsque le nombre de fois compté par les moyens de comptage (CT) est une certaine valeur ou plus, tandis que les moyens d'ajustement de capacité de mémoire tampon sont configurés pour décider de la capacité de mémoire tampon (Tbf) sans ajuster la capacité de mémoire tampon (Tbf) lorsque le nombre de fois compté par les moyens de comptage (CT) est inférieur à la certaine valeur.

4. Appareil (SC) de détermination de capacité de mémoire tampon (Tbf) de la mémoire tampon de réception de réseau (BF) selon la revendication 3, dans lequel
les moyens d'ajustement de capacité de mémoire tampon sont configurés pour arrêter l'ajustement de la capacité de mémoire tampon (Tbf) lorsque le nombre de fois compté par les moyens de comptage (CT) est la certaine valeur ou plus, même si la mémoire tampon de réception de réseau (BF) a été étendue à la capacité de mémoire tampon maximale.

5. Procédé de détermination de capacité de mémoire tampon (Tbf) d'une mémoire tampon de réception de réseau (BF) qui met en mémoire tampon des données (di) reçues via un réseau de communication (CN) et fournit en sortie les données (di) à un dispositif de reproduction (9), le procédé comprenant une étape d'ajustement de capacité de mémoire tampon consistant à ajuster la capacité de mémoire tampon (Tbf) de la mémoire tampon de réception de réseau (BF),
**caractérisé en ce que**
ledit procédé comprend en outre une étape de comptage consistant à compter le nombre de fois où la mémoire tampon de réception de réseau (BF) dans laquelle les données (di) sont accumulées se remplit ou se vide ; et **en ce que** l'étape d'ajustement de capacité de mémoire tampon ajuste la capacité de mémoire tampon de la mémoire tampon de réception de réseau (BF) en conformité avec le nombre de fois compté par l'étape de comptage.

6. Procédé de détermination de capacité de mémoire (Tbf) de la mémoire tampon de réception de réseau (BF) selon la revendication 5, dans lequel
l'étape de comptage, en réponse à un début de communication, compte le nombre de fois où la mémoire tampon de réception de réseau (BF) dans laquelle les données (di) sont accumulées se remplit ou se vide durant une certaine période de temps.

7. Procédé de détermination de capacité de mémoire tampon (Tbf) de la mémoire tampon de réception de réseau (BF) selon la revendication 5 ou 6, dans lequel
l'étape d'ajustement de capacité de mémoire tampon étend la capacité de mémoire tampon (Tbf) lorsque le nombre de fois compté par l'étape de comptage est une certaine valeur ou plus, tandis que l'étape d'ajustement de capacité de mémoire tampon décide de la capacité de mémoire tampon (Tbf) sans ajuster la capacité de mémoire tampon (Tbf) lorsque le nombre de fois compté par l'étape de comptage est inférieur à la certaine valeur.

8. Procédé de détermination de capacité de mémoire tampon (Tbf) de la mémoire tampon de réception de réseau (BF) selon la revendication 7, dans lequel
l'étape d'ajustement de capacité de mémoire tampon arrête l'ajustement de la capacité de la mémoire tampon (Tbf) lorsque le nombre de fois compté par l'étape de comptage est la certaine valeur ou plus, même si la mémoire tampon de réception de réseau (BF) a été étendue à la capacité de mémoire tampon maximale.

9. Programme d'ordinateur de détermination de capacité de mémoire tampon (Tbf) d'une mémoire tampon de réception de réseau (BF) qui met en mémoire tampon des données (di) reçues via un réseau de communication (CN) et fournit en sortie les données à un dispositif de reproduction (9), le programme d'ordinateur comprenant une étape d'ajustement de capacité de mémoire tampon consistant à ajuster la capacité de mémoire (Tbf) de la mémoire tampon de réception de réseau (BF),
**caractérisé en ce que**
ledit programme d'ordinateur comprend en outre une étape de comptage consistant à compter le nombre de fois où la mémoire tampon de réception de réseau (BF) dans laquelle les données (di) sont accumulées se remplit ou se vide ;
et **en ce que**
ladite étape d'ajustement de capacité de mémoire tampon ajuste la capacité de mémoire tampon (Tbf) de la mémoire tampon de réception de réseau (BF) en conformité avec le nombre de fois compté par l'étape de comptage.

10. Système de session de réseau formé d'une pluralité de terminaux de session connectés les uns aux autres de telle sorte que les terminaux de session puissent communiquer les uns avec les autres via un réseau de communication (CN), dans lequel
chaque terminal de session comporte un appareil (SC) de détermination de capacité de mémoire tampon (Tbf) d'une mémoire tampon de réception de réseau (BF) qui met en mémoire tampon des données reçues via le réseau de communication (CN) et fournit en sortie les données (di) à un dispositif de reproduction de données (9) ; et
l'appareil (SC) de détermination de la capacité de mémoire tampon (Tbf) comportant un moyen d'ajustement de capacité de mémoire tampon permettant d'ajuster la capacité de mémoire tampon (Tbf) de la mémoire tampon de réception de réseau (BF),
**caractérisé en ce que**
l'appareil (SC) comprend en outre des moyens de comptage (CT) permettant de compter le nombre de fois où la mémoire tampon de réception de réseau (BF) dans laquelle des données sont accumulées se remplit ou se vide ; et
lesdits moyens d'ajustement de capacité de mémoire tampon sont configurés pour ajuster la capacité de mémoire tampon (Tbf) de la mémoire tampon de réception de réseau (BF) en conformité avec le nombre de fois compté par les moyens de comptage (CT).

# FIG.1

# FIG.2

# FIG.3

(1) necessity of reception buffer

data Di delivered through network

write

reception buffer BF

read

data Do which is to be retrieved
by reproduction device

(2) buffer configuration

data Di

buffer's front end Pf

write

BF

accumulated data

read

data Do

buffer's fixed position Ps

buffer's rear end Pe

specified delay
amount Ts

buffer size Tbf

(3) initial state

data Di

write

BF

(a)

accumulated data
amount Td

Pf                                        Ps                              Pe

data Di

Pf

write

BF

(b)

accumulated data
amount Td

read

Ps                              Pe

data Do

start of audio reproduction

# FIG.4

**(1) full buffer state and empty buffer state**

**(a) full buffer**

data Di
write

BF

accumulated data amount Td

read
data Do
audio reproduction

Ps                    Pe

**(b) empty buffer**

BF

(no accumulated data)

Pf                              Ps                                    Pe

Ts

Tbf

**(2) rate adjustment of reception buffer**

lower
threshold
Th1

from network
data Di
write

upper
threshold
Th2

Pf

BF

buffer under-run
(reading speed
is faster)

buffer over-flow
(writing speed is
faster)

read
data Do
for audio reproduction

Ps                    Pe

Th1

accumulated
data amount Td

Ts

Th2

# FIG.5

(1)

maximum buffer size Tbfm

buffer size Tbf

specified delay amount Ts

Pf — Th1 — Ps — BF — Th2 — Pe

extended buffer

(2)

maximum buffer size Tbfm

buffer size Tbf

specified delay amount Ts

Pf — Th1 — Ps — BF — Th2 — Pe

# FIG.6

size determination

full/empty counter CT

count number of times of occurrence of full or emptiness of reception buffer during certain period of time (e.g., 5 seconds) after full/empty counter was set

S 1
secure buffer of small initial buffer size, and set full/empty counter CT in response to start of reception and reproduction

refer

S 2
full buffer or empty buffer has occurred certain number of times N (e.g., three times)?  NO

YES

S 5
certain period of time has passed?  NO

S 3
buffer has reached maximum buffer size?  NO

YES

YES

S 6
terminate automatic adjustment, and decide buffer's fixed position and buffer size

S 4
extend buffer's fixed position by +1ms, and also extend buffer size in proportion to extension of buffer's fixed position, and then set full/empty counter CT

S 7
stop automatic adjustment

end

**EP 2 739 004 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011242560 A
- US 2010265834 A1
- US 7796999 B